# EUROPÄISCHE PATENTANMELDUNG

(11) **EP 4 372 968 A1**
(43) Veröffentlichungstag der Anmeldung: **22.05.2024**
(21) Anmeldenummer: 23209802.0
(22) Anmeldetag: 14.11.2023
(51) Int. Cl.: H02K 1/30, F04D 29/26

(54) **ROTOR UND VERFAHREN ZUR HERSTELLUNG DES ROTORS**

(30) Priorität: 16.11.2022 DE 102022130321
(71) Anmelder: ebm-papst Mulfingen GmbH & Co. KG, 74673 Mulfingen (DE)
(72) Erfinder: Vohmann, Johannes, 74673 Mulfingen (DE); Rüttler, Michael, 97990 Weikersheim (DE); Hemmann, Andre, 74847 Obrigheim (DE)
(74) Vertreter: Staeger & Sperling Partnerschaftsgesellschaft mbB

(57) **Zusammenfassung**

Die Erfindung betrifft einen Rotor (10) mit einem Rotortopf (1), einer Nabe (2) und einer Welle (3), wobei der Rotortopf (1), die Nabe (2) und die Welle (3) um eine Rotationsachse (A) des Rotors (10) rotierbar sind, wobei die Welle (3) in einer Nabenbuchse (21) der Nabe (2) zur Ausbildung einer Welle-Nabe-Verbindung aufgenommen ist, wobei der Rotortopf (1) eine Aufnahme (11) für die Nabe (2) aufweist und die Nabe (2) zumindest im Bereich der Aufnahme (11) an dem Rotortopf (1) befestigt ist, wobei sich ein Randabschnitt (111) der Aufnahme (11) des Rotortopfes (1) zumindest anteilig parallel zu der Rotationsachse (A) erstreckt. Ferner betrifft die Erfindung ein Verfahren zur Herstellung des Rotors (10).

## Beschreibung

Die Erfindung betrifft einen Rotor mit einem Rotortopf, einer Nabe und einer Welle. Ferner betrifft die Erfindung ein Verfahren zur Herstellung des Rotors.

Aus dem Stand der Technik ist eine Vielzahl von Welle-Nabe-Verbindungen zu einem Rotortopf von Rotoren bekannt. Für die Welle-Nabe-Verbindung wird dabei üblicherweise eine metallische Verbindung, eine direkte Verbindung der Welle zum Rückschluss des Rotortopfs, metallische Einlegeteile einer ESM-Variante oder bei einer Anwendung für niedrige Drehzahlen eine Welle-Nabe-Verbindung aus Kunststoff eingesetzt.

Nachteilig an diesen Lösungen ist beispielsweise, dass die Welle-Nabe-Verbindung eine für einen entsprechenden Anwendungsfall zu geringe Abstützung der Welle aufweist. Darüber hinaus werden radiale Kräfte nicht ausreichend zu einem Rückschluss des Rotors weitergeleitet. Bei einer Welle-Nabe-Verbindung aus Kunststoff kann es zudem auftreten, dass sich der Kunststoff von dem Rückschluss in einem ungewünschten Maße abhebt.

Der Erfindung liegt deshalb die Aufgabe zugrunde, die vorgenannten Nachteile zu überwinden und einen Rotor sowie ein Verfahren zur Herstellung des Rotors bereitzustellen, bei welchem eine Abstützung der Welle und ein Leiten der radialen Kräfte in den Rückschluss optimiert wird.

Diese Aufgabe wird durch die Merkmalskombination gemäß Patentanspruch 1 gelöst.

Erfindungsgemäß wird ein Rotor mit einem Rotortopf, einer Nabe und einer Welle vorgeschlagen, bei welchem der Rotortopf, die Nabe und die Welle um eine Rotationsachse des Rotors rotierbar sind. Dabei ist die Welle in einer Nabenbuchse der Nabe zur Ausbildung einer Welle-Nabe-Verbindung aufgenommen. Der Rotortopf weist eine Aufnahme für die Nabe auf und die Nabe ist zumindest im Bereich der Aufnahme an dem Rotortopf befestigt. Insbesondere sind dabei der Rotortopf und die Welle zur Ausbildung der Nabe, vorzugsweise mit einem Kunststoff, umspritzt. Ferner erstreckt sich ein Randabschnitt der Aufnahme des Rotortopfes zumindest anteilig parallel oder gewinkelt zu der Rotationsachse.

Vorteilhaft daran ist, dass die Steifigkeit der Welle-Nabe-Verbindung durch die Abstützung der Welle mithilfe des sich zumindest anteilig parallel oder gewinkelt zu der Rotationsachse erstreckenden Randabschnitts der Aufnahme des Rotortopfes sowie vom Rotorboden des Rotortopfes erhöht wird.

Dabei ist als gewinkelt oder unter einem Winkel zu der Rotationsachse insbesondere zu verstehen, dass der entsprechende Winkel zwischen dem Randabschnitt der Aufnahme des Rotortopfes und der Rotationsachse 0° bis 75° beträgt, vorzugsweise 0° bis 45°, weiter vorzugsweise 0° bis 25°.

In einer bevorzugten Ausführungsform der Erfindung erstreckt sich der Randabschnitt der Aufnahme parallel zu der Rotationsachse. Dabei ist die Aufnahme insbesondere zylinderförmig ausgebildet. Auf diese Weise wird die Festigkeit der Welle-Nabe-Verbindung und die Abstützung der Welle optimiert.

In einer vorteilhaften Ausführungsvariante ist vorgesehen, dass der Rotortopf einen Aufnahmeraum für einen Elektromotor umfasst. Dabei erstreckt sich der Randabschnitt in den Aufnahmeraum hinein. Dadurch wird ein benötigter Bauraum des Rotors reduziert und eine Leitung der auf die Welle-Nabe-Verbindung wirkenden axialen Kräfte in den Rotortopf verbessert.

Vorzugsweise ist der Rotor derart ausgebildet, dass die Welle einen Abschnitt mit einer Rändelung, insbesondere eine Kreuzrändelung, und/oder Einstichen aufweist, welcher in der Nabenbuchse aufgenommen ist. Die Rändelung und die Einstiche leiten die radialen Kräfte über die Nabe zu dem Rotortopf weiter bzw. optimieren die Weiterleitung.

Der erfindungsgemäße Rotor ist in einer Ausführungsvariante derart ausgebildet, dass die Nabe aus einem Kunststoff hergestellt ist und mittels eines Spritzgussverfahrens zumindest an die Aufnahme angespritzt ist. Ferner ist eine Ausführung günstig, bei welcher der Rotortopf und insbesondere die Welle aus einem metallischen Werkstoff hergestellt ist.

Erfindungsgemäß ist vorgesehen, dass zumindest eine Aussparung in der Aufnahme ausgebildet ist, welche benachbart zu dem Randabschnitt angeordnet ist. Dabei erstreckt sich die Nabe durch die zumindest eine Aussparung. Die Aussparung ist insbesondere gestanzt und reduziert ein Abheben einer Nabe aus Kunststoff zwischen dem Rotortopf und der Umspritzung. In einer bevorzugten Ausführungsform ist eine Vielzahl von Aussparungen in dem Rotortopf ausgebildet, vorzugsweise fünf Aussparungen. Die entsprechenden Aussparungen sind in einem vorteilhaften Ausführungsbeispiel symmetrisch, insbesondere auf einer Kreisbahn, um den Randabschnitt angeordnet. Vorteilhaft daran ist, dass eine Unwucht des Rotors reduziert bzw. so gering wie möglich ist.

In einem weiteren Ausführungsbeispiel ist vorgesehen, dass eine Vielzahl von Aussparungen in der Aufnahme ausgebildet ist, welche in Umfangsrichtung der Aufnahme verteilt angeordnet sind. Auf diese Weise wird das Abheben der Nabe vom Rotortopf weiter reduziert.

Ferner ist eine Ausführung günstig, bei welcher die zumindest eine Aussparung in einem Abschnitt des Rotortopfes angeordnet ist, welcher sich in einer Radialrichtung hinsichtlich der Rotationsachse erstreckt. Vorzugsweise ist die Aussparung unmittelbar angrenzend zu dem sich zumindest anteilig parallel zu der Rotationsachse erstreckenden Randabschnitt der Aufnahme angeordnet.

In einer Ausführungsvariante der Erfindung ist vorgesehen, dass die Nabe die Aufnahme vollständig umschließt. Dabei ist günstig, dass ein Abheben der Nabe von dem Rotortopf weiter reduziert und die Abstützung der Welle zusätzlich verbessert ist.

Der erfindungsgemäße Rotor ist in einem Ausführungsbeispiel ausgebildet, dass der Rotortopf zumindest abschnittsweise als ein Rückschlussring ausgebildet ist.

In einer Ausführungsvariante der Erfindung ist ferner vorgesehen, dass eine Außenmantelfläche des Rotortopfes vollständig von der Nabe und/oder dem Lüfterrad umgeben ist.

Erfindungsgemäß wird außerdem ein Lüfter mit einem Lüfterrad und einem Rotor gemäß der vorstehenden Offenbarung vorgeschlagen. In einem Ausführungsbeispiel des erfindungsgemäßen Lüfters ist die Nabe mit dem Lüfterrad einstückig und/oder integral ausgebildet ist.

Erfindungsgemäß wird ferner ein Verfahren zur Herstellung eines Rotors gemäß der vorstehenden Offenbarung vorgeschlagen, bei welchem zunächst ein Tiefziehen des Rotortopfes im Bereich der Aufnahme erfolgt, derart, dass sich der Randabschnitt der Aufnahme des Rotortopfes zumindest anteilig parallel zu der Rotationsachse erstreckt. Anschließend wird zumindest eine Aussparung in der Aufnahme benachbart zu dem Randabschnitt gestanzt. Danach erfolgt ein Umspritzen des Rotortopfes zumindest im Bereich der Aufnahme und der Aussparung. Dabei wird die Nabe ausgebildet und insbesondere die Aufnahme vollständig und die Aussparung zumindest teilweise umspritzt. Außerdem wird beim Umspritzen des Rotortopfes zur Ausbildung der Welle-Nabe-Verbindung ein Abschnitt der Welle, insbesondere des Abschnitts der Welle mit der Rändelung und/oder den Einstichen, umspritzt. Alternativ erfolgt nach dem Umspritzen ein Einfügen der Welle in die Nabenbuchse.

In einem Ausführungsbeispiel des Verfahrens wird die Welle vor dem Umspritzen in der Aussparung vorbestimmt vorpositioniert.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:

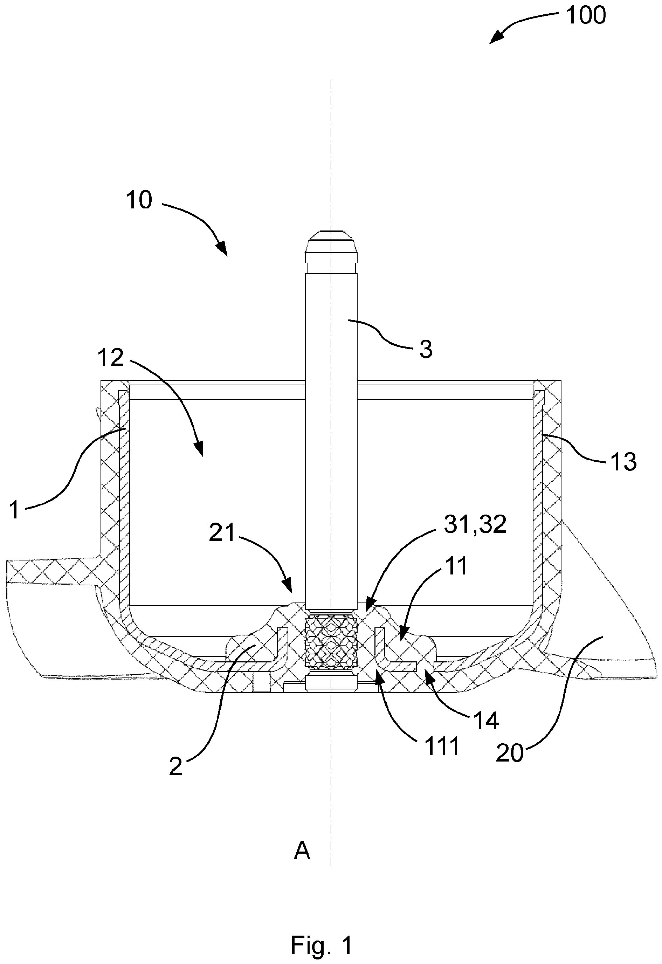

- Fig. 1: eine Schnittansicht eines Lüfters mit einem Rotor.

Die Figuren sind beispielhaft schematisch. Gleiche Bezugszeichen in den Figuren weisen auf gleiche funktionale und/oder strukturelle Merkmale hin.

In Figur 1 ist eine Schnittansicht eines Lüfters 100 mit einem Lüfterrad 20 und einem Rotor 10 dargestellt. Der Rotor 10 umfasst einen Rotortopf 1, eine Nabe 2 und eine Welle 3. Ferner ist die Nabe 2 mit dem Lüfterrad 20 einstückig ausgebildet.

Der Rotortopf 1, die Nabe 2 und die Welle 3 sind um eine Rotationsachse A des Rotors 10 rotierbar. Außerdem ist die Welle 3 in einer Nabenbuchse 21 der Nabe 2 zur Ausbildung einer Welle-Nabe-Verbindung aufgenommen. Der Rotortopf 1 weist eine Aufnahme 11 für die Nabe 2 auf und die Nabe 2 ist zumindest im Bereich der Aufnahme 11 an dem Rotortopf 1 befestigt. Dabei erstreckt sich ein Randabschnitt 111 der Aufnahme 11 des Rotortopfes 1 parallel zu der Rotationsachse A. Darüber hinaus umfasst der Rotortopf 1 einen Aufnahmeraum 12 für einen Elektromotor und der Randabschnitt 111 erstreckt sich in den Aufnahmeraum 12 hinein. Die Nabe 2 umschließt die Aufnahme 11 vollständig.

Des Weiteren ist die Nabe 2 aus einem Kunststoff hergestellt und mittels eines Spritzgussverfahrens an die Aufnahme 11 angespritzt. Der Rotortopf 1 ist aus einem metallischen Werkstoff hergestellt. Die Welle 3 weist einen Abschnitt mit einer Kreuzrändelung 31 und Einstichen 32 auf, welcher in der Nabenbuchse 21 aufgenommen ist.

Bei dem in Figur 1 gezeigten Rotor 10 des Lüfters 100 ist eine Vielzahl von Aussparungen 14 in der Aufnahme 11 ausgebildet, welche in Umfangsrichtung der Aufnahme 11 verteilt und benachbart zu dem Randabschnitt 111 angeordnet sind. Dabei erstreckt sich die Nabe 2 durch die Aussparungen 14. Die Aussparungen 14 sind ferner in einem Abschnitt des Rotortopfes 1 angeordnet, welcher sich in einer Radialrichtung hinsichtlich der Rotationsachse A erstreckt.

Darüber hinaus ist der Rotortopf 1 zumindest abschnittsweise als ein Rückschlussring ausgebildet und eine Außenmantelfläche 13 des Rotortopfes 1 ist vollständig von der Nabe 2 und/oder dem Lüfterrad 20 umgeben. Ferner erstreckt sich ein Vorsprung der Nabe 2 und/oder des Lüfterrades 20 radialer Richtung hinsichtlich der Rotationsachse A über ein axiales Ende des Rotortopfes 1.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Rotor (10) mit einem Rotortopf (1), einer Nabe (2) und einer Welle (3),
wobei der Rotortopf (1), die Nabe (2) und die Welle (3) um eine Rotationsachse (A) des Rotors (10) rotierbar sind,
wobei die Welle (3) in einer Nabenbuchse (21) der Nabe (2) zur Ausbildung einer Welle-Nabe-Verbindung aufgenommen ist,
wobei der Rotortopf (1) eine Aufnahme (11) für die Nabe (2) aufweist und die Nabe (2) zumindest im Bereich der Aufnahme (11) an dem Rotortopf (1) befestigt ist,
wobei sich ein Randabschnitt (111) der Aufnahme (11) des Rotortopfes (1) zumindest anteilig parallel oder gewinkelt zu der Rotationsachse (A) erstreckt, und wobei
zumindest eine Aussparung (14) in der Aufnahme (11) ausgebildet ist, welche benachbart zu dem Randabschnitt (111) angeordnet ist, wobei sich die Nabe (2) durch die zumindest eine Aussparung (14) erstreckt

2. Rotor (10) gemäß Anspruch 1, wobei sich der Randabschnitt (111) der Aufnahme (11) parallel zu der Rotationsachse (A) erstreckt.

3. Rotor (10) gemäß Anspruch 1 oder 2, wobei der Rotortopf (1) einen Aufnahmeraum (12) für einen Elektromotor umfasst, wobei sich der Randabschnitt (111) in den Aufnahmeraum (12) hinein erstreckt.

4. Rotor (10) gemäß einem der Ansprüche 1 bis 3, wobei die Welle (3) einen Abschnitt mit einer Rändelung (31) und/oder Einstichen (32) aufweist, welcher in der Nabenbuchse (21) aufgenommen ist.

5. Rotor (10) gemäß einem der vorhergehenden Ansprüche, wobei eine Vielzahl von Aussparungen (14) in der Aufnahme (11) ausgebildet ist, welche in Umfangsrichtung der Aufnahme (11) verteilt angeordnet sind.

6. Rotor (10) gemäß einem der vorhergehenden Ansprüche, wobei die zumindest eine Aussparung (14) in einem Abschnitt des Rotortopfes (1) angeordnet ist, welcher sich in einer Radialrichtung hinsichtlich der Rotationsachse (A) erstreckt.

7. Rotor (10) gemäß einem der vorherigen Ansprüche, wobei die Nabe (2) die Aufnahme (11) vollständig umschließt.

8. Rotor (10) gemäß einem der vorhergehenden Ansprüche, wobei die Nabe (2) aus einem Kunststoff hergestellt und mittels eines Spritzgussverfahrens zumindest an die Aufnahme (11) angespritzt ist.

9. Rotor (10) gemäß einem der vorhergehenden Ansprüche, wobei der Rotortopf (1) aus einem metallischen Werkstoff hergestellt ist.

10. Rotor (10) gemäß einem der vorhergehenden Ansprüche, wobei der Rotortopf (1) zumindest abschnittsweise als ein Rückschlussring ausgebildet ist.

11. Rotor (10) gemäß einem der vorhergehenden Ansprüche, wobei eine Außenmantelfläche (13) des Rotortopfes (1) vollständig von der Nabe (2) und/oder dem Lüfterrad (20) umgeben ist.

12. Lüfter (100) mit einem Lüfterrad (20) und einem Rotor (10) gemäß einem der vorhergehenden Ansprüche, wobei insbesondere die Nabe (2) mit dem Lüfterrad (20) einstückig ausgebildet ist.

13. Verfahren zur Herstellung eines Rotors (10) gemäß einem der vorhergehenden Ansprüche, welches die Schritte umfasst:
a. Tiefziehen des Rotortopfes (1) im Bereich der Aufnahme (11), derart, dass sich der Randabschnitt (111) der Aufnahme (11) des Rotortopfes (1) zumindest anteilig parallel zu der Rotationsachse (A) erstreckt;
b. Stanzen von zumindest einer Aussparung (14) in der Aufnahme (11) benachbart zu dem Randabschnitt (111);
c. Umspritzen des Rotortopfes (1) zumindest im Bereich der Aufnahme (11) und der Aussparung (14), wobei die Nabe (2) und insbesondere ein Lüfterrad (20) einstückig mit der Nabe (2) ausgebildet wird, wobei insbesondere die Aufnahme (11) vollständig und die Aussparung (14) zumindest teilweise umspritzt wird;
d. Einfügen der Welle (3) in die Nabenbuchse (21) oder Umspritzen eines Abschnitts der Welle (3), insbesondere des Abschnitts der Welle (3) mit der Rändelung (31) und/oder den Einstichen (32), beim Umspritzen des Rotortopfes (1) zur Ausbildung der Welle-Nabe-Verbindung.

14. Verfahren gemäß Anspruch 13, wobei die Welle (3) vor dem Umspritzen in der Aussparung (14) vorbestimmt vorpositioniert wird.
